# EUROPÄISCHE PATENTANMELDUNG

(11) **EP 3 290 363 A1**
(43) Veröffentlichungstag der Anmeldung: **07.03.2018**
(21) Anmeldenummer: 17188198.0
(22) Anmeldetag: 28.08.2017
(51) Int. Cl.: B65G 21/08

(54) **TROGFÖRDERER ZUM FÖRDERN EINES GUTES**

(30) Priorität: 31.08.2016 DE 202016005250 U
(71) Anmelder: AMF-Bruns GmbH & Co. KG, 26689 Apen (DE)
(72) Erfinder: Woltermann, Jan, 26789 Leer (DE); Seger, Sebastian, 26123 Oldenburg (DE)
(74) Vertreter: Eisenführ Speiser

(57) **Zusammenfassung**

Trogförderer zum Fördern eines Gutes, wenigstens umfassend mindestens eine Zuführeinrichtung (2) zum Zuführen des Gutes, ein trogförmiges Gehäuse (4), welches mindestens eine Öffnung (6) an seiner Oberseite und einen Auslass zum Abgeben des Gutes aufweist, mindestens ein Abdeckungselement (10) zur Abdeckung der Öffnung, und ein Förderelement zum Bewegen des Gutes in dem Gehäuse.

## Beschreibung

Die Erfindung betrifft einen Trogförderer zum Fördern eines Gutes, wenigstens umfassend mindestens eine Zuführeinrichtung zum Zuführen des Gutes, ein trogförmiges Gehäuse, welches mindestens eine Öffnung an seiner Oberseite und einen Auslass zum Abgeben des Gutes aufweist, mindestens ein Abdeckungselement zur Abdeckung der Öffnung, und ein Förderelement zum Bewegen des Gutes in dem Gehäuse.

Derartige Trogförderer dienen insbesondere zum Fördern von Schüttgütern in verschiedenen Branchen wie der Lebensmittel-, insbesondere Zucker-, Baustoff-, Holz- oder Kraftwerksindustrie. Das in dem Trogförderer angeordnete Förderelement kann als rotierende Schnecke ausgebildet sein; in diesem Fall spricht man auch von einem Trogschneckenförderer. Für verschiedene Anwendungen sind Kratzkettenförderer, Trogkettenförderer, Muldengurtförderer oder auch Becherwerke zum Transport von schüttfähigen Gütern bekannt.

Trogförderer weisen ein trogförmiges Gehäuse auf, welches im Betrieb horizontal oder schräg angeordnet ist. Das zu fördernde Gut wird durch die Öffnung mithilfe einer Zuführeinrichtung, z.B. ausgebildet in Form eines Einfüllschachts, von oben in das Gehäuse eingeführt, mithilfe des beispielsweise als Schnecke ausgebildeten Förderelements in dem Gehäuse weiter transportiert und dann durch einen Auslass zur Weiterverarbeitung abgegeben.

Die an der Oberseite des Gehäuses befindliche Öffnung wird bei bekannten Trogförderern mittels eines Abdeckungselementes (oder mehrerer) aus Blech abgedeckt. Solche plattenförmigen Bleche werden auf die Oberseite des Gehäuses aufgelegt und verschraubt. Hierzu sind eine Vielzahl von Gewindebohrungen in das Gehäuse und Löcher in die ggf. abgekanteten Bleche maschinell einzuarbeiten.

Je nach Einbausituation müssen die die Abdeckung bildenden Blech individuell angefertigt werden. Dabei ist mit Aufwand verbunden, dass die Zuführeinrichtung je nach Anwendung und Einbausituation an verschiedenen Positionen anzuordnen ist und öfters auch im Laufe der Betriebsdauer verändert werden muss. In solchen Fällen ist dann das Blech entsprechend neu anzufertigen oder zu beschneiden oder dergleichen. Die Bleche verursachen im Betrieb oft nicht geringe Geräusche durch Vibrationen.

Aufgabe der vorliegenden Erfindung ist es, einen Trogförderer bereitzustellen, der einfach an eine jeweilige Einbausituation anpassbar ist. Insbesondere ist es auch Aufgabe, einen Trogförderer bereitzustellen, der vereinfachte, robuste Abdeckungselemente aufweist, welche vorzugsweise für verschiedene Industriezweige einschließlich der Lebensmittelindustrie geeignet sind.

Die Erfindung löst die Aufgabe gemäß eines ersten Aspekts bei einem Trogförderer der eingangs genannten Art dadurch, dass das mindestens eine Abdeckungselement eine konvexe Wölbung aufweist. Ein konvex gewölbtes Abdeckungselement zum Verschließen der an der Oberseite des Gehäuses angeordneten Öffnung weist eine höhere Festigkeit beispielsweise gegenüber Durchbiegungen auf und ist abweisend gegenüber Staub, Schmutz oder von außen einwirkenden Flüssigkeiten und dergleichen. Desweiteren ist ein derartiges nach außen gewölbtes Abdeckungselement vorteilhaft an ein im Wesentlichen rotationssymmetrisches und damit wenigstens teilweise eine runde Kontur aufweisendes Förderelement wie eine Schneckenwelle angepasst. Dies führt in vorteilhafter Weise dazu, dass das Gehäuse kleiner dimensioniert werden kann, während die gewölbte Abdeckung, die weniger aufwändig gestaltet werden kann, für ein Verschließen der Öffnung im oberen Bereich sorgt. Die eine konvexe Wölbung aufweisende Abdeckung lässt sich oben im Randbereich des Gehäuses fixieren und zentrieren und sorgt für einen sicheren Verschluss bei hoher Stabilität auch bei größeren Belastungen.

Gemäß eines zweiten Aspektes der Erfindung bzw. gemäß einer vorteilhaften Weiterbildung der Erfindung gemäß des ersten Aspektes wird erfindungsgemäß vorgeschlagen, dass das mindestens eine Abdeckungselement im Wesentlichen aus Kunststoff besteht.

Kunststoff ist ein durabler, vergleichsweise günstig herstellbarer Werkstoff, der für das Abdeckungselement besonders geeignet ist. Insbesondere auch die Kombination aus dem Material Kunststoff und der konvexen nach außen gewölbten Form des Abdeckungselementes ist vorteilhaft mit Blick auf Stabilität und die Fähigkeit, Schmutz oder Sonnenstrahlung abzuweisen und einen zuverlässigen und dichten Verschluss des Gehäuses zum Schutz des zu transportierenden Gutes als auch der Schneckenwelle oder eines anderen Förderelementes zu verwirklichen. Ein weiterer Vorteil besteht darin, dass ein Abdeckungselement aus Kunststoff vergleichsweise einfach getrennt, insbesondere mittels einer Säge getrennt werden kann, um es auf das richtige Maß zu bringen. Dies kann der Kunde oder das zu installierende Unternehmen vor Ort mit vergleichsweise einfachen Mitteln vornehmen, beispielsweise einer Säge. Die Abdeckelemente können in gewissen Standardmaßen geliefert und dann an die jeweiligen Einbaubedingungen und Positionen einer oder mehrerer Zuführeinrichtungen, des Auslasses und dergleichen angepasst werden.

Gemäß eines dritten Aspektes bzw. einer weiteren bevorzugten Ausführungsform ist erfindungsgemäß vorgesehen, dass mindestens ein oberer Randbereich des Gehäuses so schräg relativ zu einer Vertikalen verlaufend ausgebildet ist, dass ein Anbauteil, insbesondere die Zuführeinrichtung und/oder das Abdeckungselement relativ zum Gehäuse formschlüssig zentriert ist. Durch die teilweise schräg - relativ zu einer Vertikalen - verlaufende Formgebung im oberen Randbereich lässt sich das eine konvexe Wölbung aufweisende vorzugsweise ein Kunststoff bestehende Abdeckelement besonders gut an dem Gehäuse anordnen, fixieren und zentrieren. Die insgesamt konvex gewölbte Abdeckung, gebildet aus einen oder mehreren Abdeckungselementen, wird von oben eingelegt, sie fällt gewissermaßen dort ein in den Bereich zwischen den vertikal ausgebildeten Randbereichen und wird so sicher fixiert und zentriert und positioniert.

Entsprechend eines vierten Erfindungsaspektes bzw. einer bevorzugten Ausführungsform ist erfindungsgemäß vorgesehen, dass ein an dem Gehäuse angeordneter Spannsatz zur Verspannung mindestens eines Abdeckungselements mit dem trogförmigen Gehäuse vorgesehen ist, wobei der Spannsatz ein Spannband enthält, welches sich wenigstens teilweise entlang der Oberfläche des Abdeckungselements erstreckt, und eine Spanneinrichtung zur Verspannung des Abdeckungselements mit dem trogförmigen Gehäuse enthält. Mittels eines derartigen Spannsatzes können die vorzugsweise konvex gewölbten, aus Kunststoff bestehenden und im oberen Randbereich eingelegten Abdeckungselemente zusätzlich sicher fixiert, verspannt und abgedichtet werden, so dass insgesamt ein im Wesentlichen geschlossenes Gehäuse realisiert ist. Die Spannsätze lassen sich einfach positionieren und die Spannbänder schnell und zuverlässig verspannen, ohne dass aufwändige Schraubverbindungen mit Gewindebohrungen hergestellt werden müssten.

Gemäß einer alternativen Ausführungsform wird vorgeschlagen, dass die Zuführeinrichtung(en) wenigstens abschnittsweise oberhalb der Öffnung des Gehäuses angeordnet und so ausgebildet ist bzw. sind, dass sie mindestens an den zur Längsachse des Gehäuses parallel verlaufenden Rändern des trogförmigen Gehäuses formschlüssig einpassbar sind, und/oder dass die Zuführeinrichtungen auf dem trogförmigen Gehäuse in Längsrichtung an beliebiger Position positionierbar und fixierbar sind.

Gemäß einer weiteren bevorzugten Ausführungsform ist vorgesehen, dass eine Vielzahl von konvex gewölbten Abdeckungselementen benachbart zueinander und/oder benachbart zu mindestens einer Zuführeinrichtung zum Abdecken der Öffnung der Oberseite des Gehäuses entlang der Längsachse des Gehäuses angeordnet sind. Mittels der mehreren Abdeckungselemente lässt sich die obere Öffnung einfach verschließen und bei Bedarf auch nur an der gewünschten Stelle öffnen, beispielsweise zu Wartungszwecken oder um Störungen im Betrieb zu beheben. Bis dicht an eine Zuführeinrichtung heran können die Abdeckungselemente eingelegt werden und diese so in der gewünschten Position fixieren.

Zum Zwecke der Zentrierung der Abdeckungselemente mit relativ geringem konstruktiven Aufwand wird gemäß einer bevorzugten Weiterbildung der Erfindung vorgeschlagen, dass das Abdeckungselement an gegenüberliegenden Randbereichen jeweils eine schräg relativ zu einer Vertikalen angeordnete Randfläche aufweist, wobei jede Randfläche im eingebauten Zustand mit einer wenigstens teilweise konformen Randfläche des Randbereichs des Gehäuses in Kontakt steht, vorzugsweise unter Zwischenschaltung eines Dichtungselementes, so dass das Abdeckungselement relativ zur Längsachse des Gehäuses zentriert ist.

Eine Weiterbildung sieht vor, dass das Abdeckungselement einen im Wesentlichen wannenförmigen Grundkörper, an dem die Randflächen ausgebildet ist, sowie einen über den wannenförmigen Grundkörper seitlich hinausragenden Deckel aufweist, dessen seitliche Randbereiche flanschartig abstehen. Dadurch, dass das Abdeckungselement als eine Art Hohlkörper gebildet wird, ergibt sich der Vorteil eines geringen Gewichtes, einer thermischen Isolierung und einer Materialersparnis. Durch die flanschartig abstehenden Randbereiche zusammen mit den schrägen konformen Randflächen ergibt sich eine positionierte Anordnung, vollständige Abdeckung und einfache Handhabung bei der Montage oder Demontage.

Bei einer alternativen Ausführungsform, bei der das Abdeckungselement auf seiner konvexen Außenseite eine UV-beständige und/oder lichtreflektierende Oberfläche, vorzugsweise Beschichtung aufweist, und/oder die Abdeckung auf ihrer Innenseite eine lebensmittelechte Oberfläche, vorzugsweise Beschichtung aufweist, wird das zu fördernde Produkt nicht oder nur sehr wenig durch Umwelteinflüsse negativ beeinflusst. Vorzugsweise ist das Material des Abdeckungselements selbst mit diesen Eigenschaften versehen, alternativ ließe sich eine Beschichtung mit den bevorzugten Eigenschaften aufbringen.

Gemäß einer bevorzugten alternativen Ausführungsform wird vorgeschlagen, dass an den beiden gegenüberliegenden Randbereichen des Gehäuses jeweils eine sich schräg nach außen erstreckende nach innen bzw. oben weisende Kontaktfläche zum Abstützen eines Anbauteils, insbesondere eines Abdeckungselementes und/oder einer Zuführeinrichtung, ausgebildet ist. Durch diese Formgebung kann ein Anbauteil wie insbesondere eine schachtartige Zuführeinrichtung oder können die mehreren Abdeckungselemente auf besonders einfache Weise eingesetzt oder eingelegt werden bei gleichzeitiger Zentrierung. Das Anbauteil fällt dabei gewissermaßen in das Gehäuse ein.

Gemäß einer Weiterbildung ist vorgesehen, dass an dem oberen Randbereich des Gehäuses auf jeder der gegenüberliegenden Seiten ein flanschartig abstehender, sich wenigstens teilweise nach nach außen und schräg unten erstreckender Randbereich ausgebildet ist, wobei vorzugsweise ein Abschnitt des Abdeckungselementes, insbesondere der Deckel des Abdeckungselementes parallel entlang des flanschartig abstehenden Randbereichs verläuft. Der Deckel kann so abdichtend und schmutzabweisend aufgelegt werden. Zweckmäßigerweise ist vorgesehen, dass der wannenförmige Grundkörper mit seinem Randbereich an der Kontaktfläche des Randbereichs des Gehäuses und der Deckel des Abdeckungselementes an dem flanschartig abstehenden Randbereich anliegt.

Gemäß einer Weiterbildung wird vorgeschlagen, dass die Zuführeinrichtung einen auf den oberen Randbereich des Gehäuses aufsetzbaren Kasten aufweist, durch welchen das zu fördernde Gut von oben durch die Öffnung des Gehäuses in den Trogförderer einführbar ist. Durch einen solchen Kasten oder Schacht lässt sich einfach eine zentrierende Montage an beliebigen Positionen in axialer Richtung an dem Gehäuse realisieren.

Die Zuführeinrichtung wird einfach auf das Gehäuse aufgesetzt und in die gewünschte Position gebracht. Anschließend kann eine seitliche Fixierung mittels der benachbarten Abdeckungselemente auf zeitsparende und zuverlässige Art vorgenommen werden. Zweckmäßigerweise ist die vorzugsweise als Kasten ausgebildete Zuführeinrichtung in einer Vielzahl von vorzugsweise stufenlos variierbaren Positionen an dem Randbereich des Gehäuses fixierbar. Die Zentrierbarkeit wird vorzugsweise dadurch erzielt, dass der Kasten an zwei gegenüberliegenden unteren Randbereichen jeweils eine schräg gegenüber einer Vertikalen angeordnete Kontaktfläche aufweist, die wenigstens Abschnittsweise konform zu der Randfläche des Gehäuses ausgebildet ist, so dass der Kasten zwischen den gegenüberliegenden Randbereichen des Gehäuses zentriert ist.

Vorzugsweise ist die Zuführeinrichtung darüber hinaus mittels mindestens zweier Abdeckungselemente auch axial bezogen auf die Längsachse des Gehäuses des Trogförderers fixiert. Je nach Anwendungssituation können vorzugsweise mehrere Zuführeinrichtungen an verschiedenen axial versetzten Positionen zum Zuführen eines Gutes oder verschiedener Güter an dem Gehäuse angeordnet und zwischen mehreren Abdeckungselementen fixiert sein.

Eine Anpassung an die jeweilige Applikation lässt sich dadurch vereinfachen, dass die Abdeckungselemente als Profil aus Kunststoff ausgebildet und mittels einer Schneideinrichtung in einer bestimmten Länge bezogen auf die Längsachse ablängbar sind.

Das erfindungsgemäß bevorzugte Spannband wird vorteilhaft dadurch weitergebildet, dass es sich im Wesentlichen von einem Randbereich des Gehäuses zu dem gegenüberliegenden Randbereich des Gehäuses erstreckt und dabei eine Fuge zwischen benachbarten Abdeckungselementen wenigstens teilweise abdeckt. So wird eine Fixierung und gleichzeitig Abdichtung bewirkt. Gemäß einer bevorzugten Weiterbildung wird vorgeschlagen, dass jede Spanneinrichtung mindestens eine mit dem Gehäuse kooperierende Spannschraube zum Verspannen der Spannbande aufweist.

Bevorzugt ist es ferner, dass optional mindestens eine Zuführeinrichtung mittels mindestens einer Spanneinrichtung in ihrer axialen Position an dem Gehäuse durch Verspannung fixiert ist.

Die Erfindung ist nachstehend anhand von Ausführungsbeispielen mit Bezugnahme auf die Figuren näher erläutert. Es zeigen:
- Figur 1: eine erstes Ausführungsbeispiel eines erfindungsgemäßen Trogförderers in perspektivischer Ansicht;
- Figur 2: der Trogförderer gemäß Figur 1 in Längsschnittdarstellung;
- Figur 3: der Trogförderer gemäß Figur 1 in Draufsicht;
- Figur 4: der Trogförderer gemäß Figur 1 in einer Ansicht von der Stirnseite;
- Figur 5: ein vergrößertes Detail des Trogförderers;
- Figur 6: eine vergrößerte perspektivische Darstellung des Trogförderers mit Abdeckungselementen;
- Figur 7: ein vergrößertes Detail des Trogförderers mit Zuführeinrichtung;
- Figur 8: eine vergrößerte Draufsicht auf den Trogförderer;
- Figur 9: eine vergrößerte Seitenansicht mit Teilschnitt mit Spannsatz;
- Figur 10: ein vergrößertes Detail der Ansicht aus Figur 9; und
- Figur 11: ein alternatives Ausführungsbeispiel eines Trogförderers mit mehreren Abdeckungselementen und mehreren Zuführeinrichtungen in einer perspektivischen Ansicht.

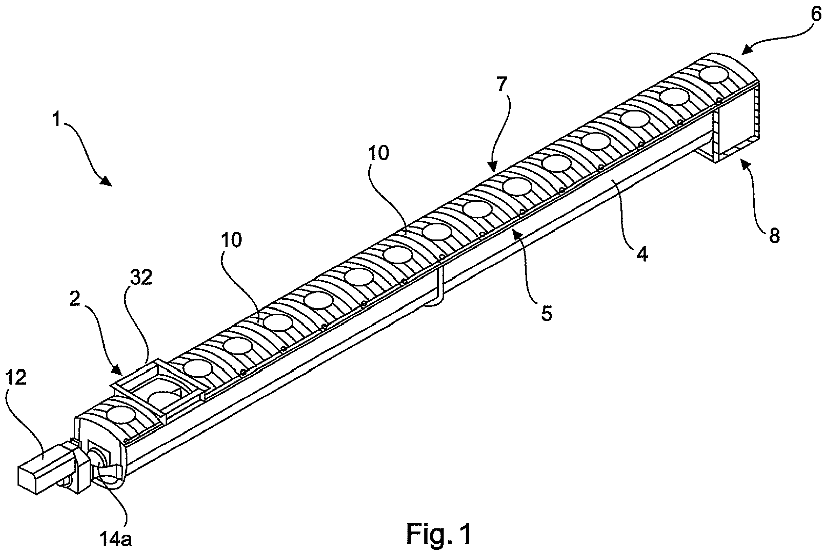

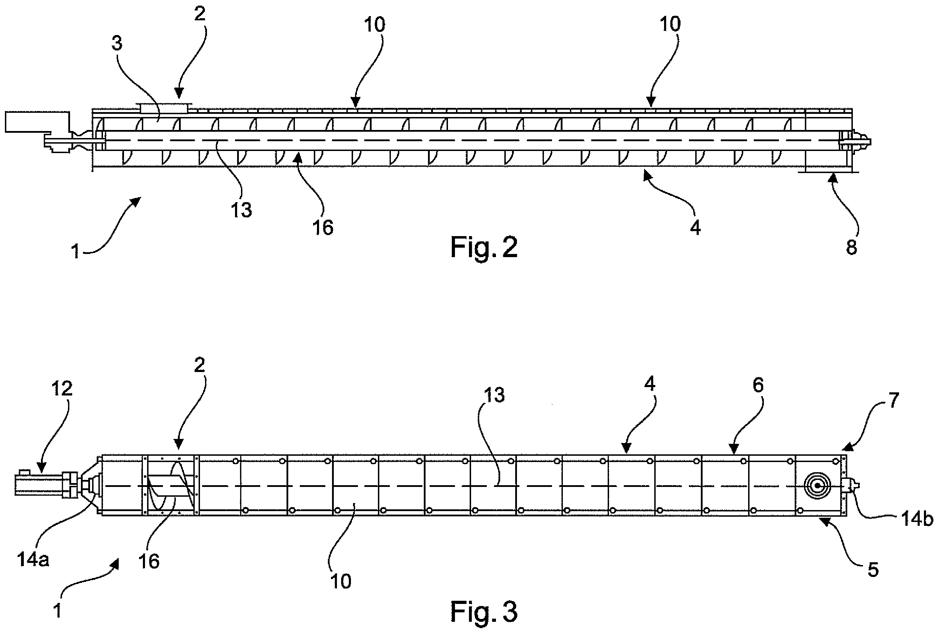

Der in den Figuren 1, 2 und 3 gezeigte Trogförderer 1 verfügt über ein trogförmiges Gehäuse 4 mit einer an seiner Oberseite zwischen oberen Randbereichen 5, 7 ausgebildeten Öffnung 6. Innerhalb des Gehäuses 4 ist ein Förderelement 16 angeordnet, welches im dargestellten Ausführungsbeispiel als Schnecke ausgeführt ist. Das Förderelement 16 transportiert ein zu förderndes Gut 3 durch das trogförmige Gehäuse 4.

Eine Zuführeinrichtung 2 dient der Einbringung des zu fördernden Gutes in den Trogförderer 1; ein Auslass 8 ermöglich dem Gut nach dem Passieren des Trogförderers 1 ein Verlassen des Gehäuses 4. Das Förderelement 16 ist in Lagern 14a und 14b gelagert und wird von einer Antriebseinheit 12 so angetrieben, dass das Förderelement 16 das zu transportierende Gut 3 von der Zuführeinrichtung 2 zum Auslass 8 im Wesentlichen in Richtung einer Drehachse 13 des Förderelements 16 in axialer Richtung transportiert. Die Öffnung 6 ist im Betrieb mit Abdeckungselementen 10 reversibel verschlossen. Die Drehachse 13 fällt mit der Längsachse 13 des Gehäuses zusammen.

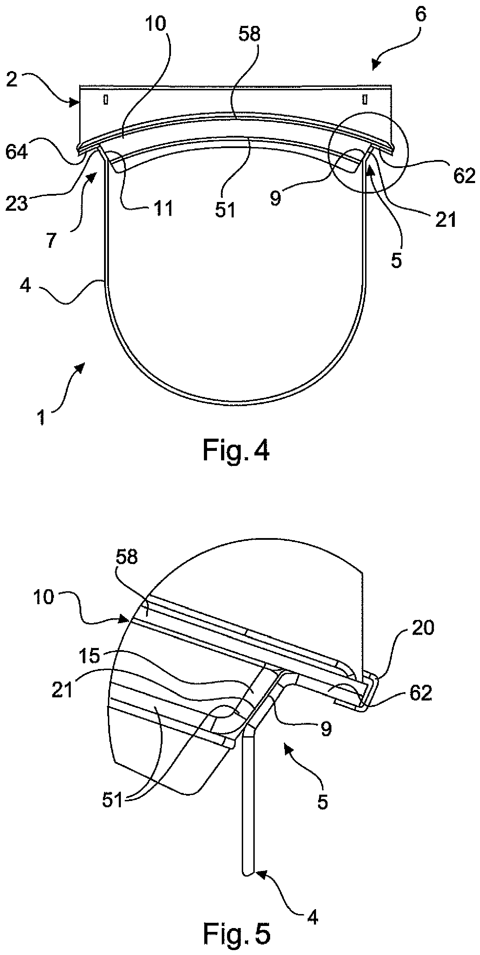

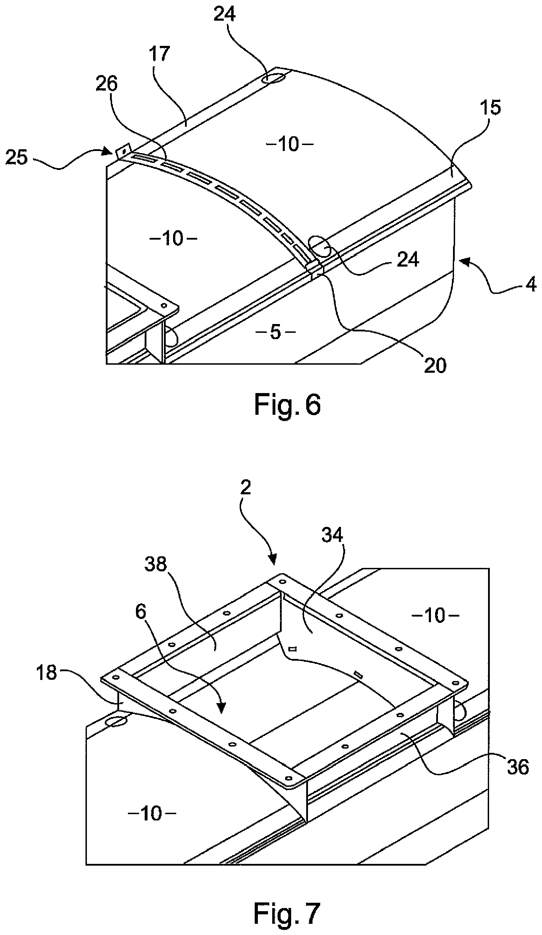

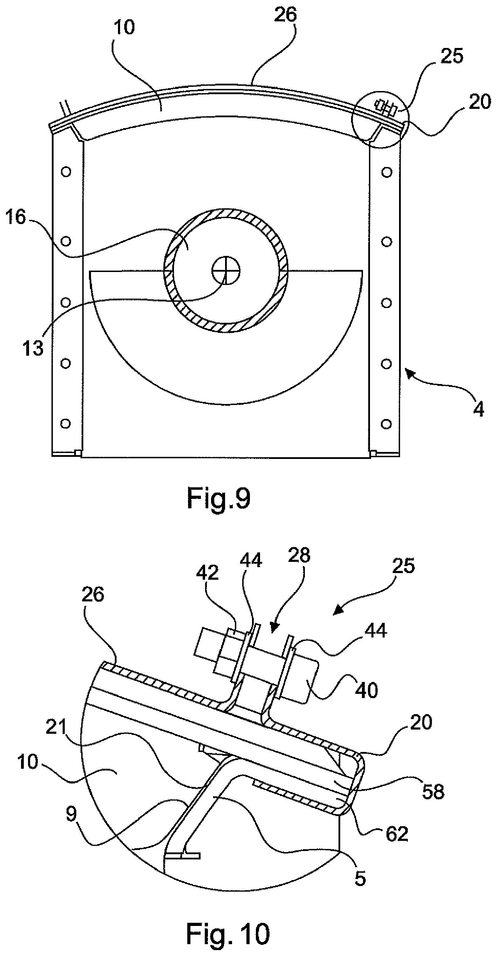

Wie Figuren 4 und 5 zeigen, ist die Zuführeinrichtung 2 oberhalb des Gehäuses 4 angeordnet und durch Seitenbleche 18, 34, 36, 38 (siehe auch Fig. 7) gebildet, die eine seitliche Begrenzung und damit einen Kasten bilden. Die Zuführeinrichtung 2 wird in der dargestellten Ausführungsform mittels eines Spannbandes 20, 26 auf dem Gehäuse 4 fixiert. Das Spannband 20, 26 ist ein Teil eines Spannsatzes 25, welcher unten anhand von Figur 10 näher beschrieben ist. Hierdurch wird eine flexible und reversible Verbindung zwischen Zuführeinrichtung 2 und dem Gehäuse 4 des Trogförderers 1 möglich.

Die Zuführeinrichtung 2 kann in axialer Richtung auf dem Gehäuse 4 beliebig positioniert werden und lässt sich formschlüssig und zentrierend in das Gehäuse 4 einpassen. Zu diesem Zweck sind die oberen Randbereiche 5, 7 des Gehäuses 4 wenigstens abschnittsweise so schräg relativ zu einer Vertikalen verlaufend ausgebildet ist, dass ein Anbauteil, insbesondere die Zuführeinrichtung 2 und/oder die Abdeckungselemente 10 relativ zum Gehäuse 4 formschlüssig zentriert ist bzw. sind. Die oberen Randbereiche 5, 7 des Gehäuses 4 weisen auf jeder Seite je eine im Ausführungsbeispiel um etwa 35° gegenüber der Vertikalen geneigten Kontaktfläche 9, 11 auf (Figuren 4 und 5); der Winkel kann aber variiert werden, beispielsweise in einem Bereich zwischen 20° und 70°. Die Zuführeinrichtung 2 weist entsprechend geneigte, im Wesentlichen konforme Flächen oder Kontaktflächen auf, die an den Seitenblechen 18, 34, 36 und/oder 38 (siehe Figur 7) ausgebildet sind.

Figur 6 zeigt eine vergrößerte Darstellung des Trogförderers 1 mit den bevorzugt mehreren Abdeckungselementen 10. Die Abdeckungselemente 10 sind in der bevorzugten Ausführungsform konvex gewölbt geformt. Die Wölbung kann Wesentlichen etwa kreisförmig gestaltet sein, sind aber auch andere Formen wie elliptische Formen, Parabeln oder dergleichen möglich. Die Abdeckungselemente 10 sind auf dem trogförmigen Gehäuse 4 so angeordnet, dass sie die Gehäuseöffnung 6 verschließen. Die Abdeckungselemente 10 weisen Aussparungen 24 zur Anbringung von Markierungen auf. Ein Abdeckungselement 10 hat an seinen gegenüberliegenden Randbereichen 15, 17 jeweils eine schräg relativ zu einer Vertikalen angeordnete Randfläche 21, 23, wobei jede Randfläche 21, 23 im eingebauten Zustand mit der wenigstens teilweise konformen Kontaktfläche 9, 11 des Randbereichs 5, 7 des Gehäuses 4 in Kontakt steht, so dass das Abdeckungselement 10 relativ zur Längsachse 13 des Gehäuses 4 zentriert ist. In nicht dargestellter Weise kann ein Dichtungselement, beispielsweise ein Dichtband, zwischen dem Kontaktflächen 9, 11 und Randflächen 21, 23 angeordnet sein.

Wie Figur 5 und 10 zeigt, hat das Abdeckungselement 10 einen im Wesentlichen wannenförmigen Grundkörper 51, an dem die Randflächen 21, 23 ausgebildet sind, sowie einen über den wannenförmigen Grundkörper 50 seitlich hinausragenden Deckel 58, dessen seitliche Randbereiche flanschartig abstehen. Das Abdeckungselement 10 ist teilweise als Hohlkörper ausgebildet. An dem oberen Randbereich 5, 7 des Gehäuses 4 ist ferner auf jeder der gegenüberliegenden Seiten ein flanschartig abstehender, sich wenigstens teilweise nach außen und schräg unten erstreckender Randbereich 62, 64 ausgebildet. Der Deckel 58 des Abdeckungselementes 10 verläuft parallel entlang des flanschartig abstehenden Randbereichs 62, 64. Hierdurch wird eine weitestgehend formschlüssige Verbindung zwischen den Bauteilen in Verbindung mit einer zentrierenden Wirkung erreicht.

Das Abdeckungselement 10 besteht vorzugsweise aus einem Kunststoffmaterial aus der folgenden Gruppe: Polytetrafluorethylen (PTFE), Polyethylen (PE), Polypropylen (PP) und Polyethylenterephthalat (PET); ABS; vorzugsweise Deckel 58 oben ABS mit PMMA; wannenförmiger Grundkörper 51 unten: ABS lebensmittelkonform

Mittels eines Spannsatzes 25 bzw. mehrerer Spannsätze 25 sind die Abdeckungselemente 10 mit dem Gehäuse 4 zusätzlich verbunden. Ein Spannsatz 25 besteht aus einem Spannblech oder Spannband 20, 26, welches sich entlang der Oberfläche der Abdeckungselemente 10 zumindest teilweise erstreckt. Das Spannband 20, 26 eignet sich zur Abdeckung des Spaltes zwischen zwei Abdeckungsplatten 10 sowie zwischen Abdeckungsplatte 10 und Zuführeinrichtung 2. Der Spannsatz 25 verfügt ferner über Spannelemente 28, umfasend eine Spannschraube 40, Mutter 42 und Unterlegscheiben 44. Die Spannelemente 28 werden in der erfindungsgemäßen Ausführung dazu eingesetzt, das Spannband 20, 26 zu verspannen.

Figur 7 zeigt ein vergrößertes Detail des Trogförderers 1 mit Zuführeinrichtung 2. Die Zuführeinrichtung 2 besteht unter anderem aus Seitenblechen 18, 34, 36, 38, die den Zuführbereich kastenartig begrenzen. Das Gut 3 wird damit gerichtet in das Gehäuse des Trogförderers 4 eingebracht. Ferner ist die Oberseite der Zuführeinrichtung 2 flanschartig ausgebildet mit einem Rand 32, um den Trogförderer 1 mit weiteren Zuführeinrichtungen verbindbar zu gestalten. Die Abdeckungselemente 10 werden in der erfindungsgemäßen Ausführung des Trogförderers so abgelängt, dass sie in wesentlichen unmittelbar an die Zuführeinrichtung 2 angrenzen.

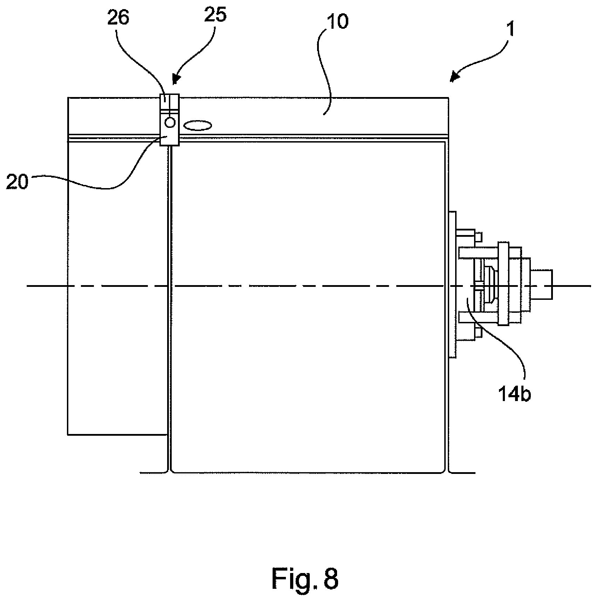

Figur 8 zeigt eine vergrößerte Draufsicht auf den Trogförderer mit Spannsatz 25.

Figur 9 zeigt weiterhin eine vergrößerte Seitenansicht im Teilschnitt mit Spannsatz 25. Ferner ist die erfindungsgemäße Ausführungsform der Abdeckungselemente mit ihrer konvexen Form 10 und deren formschlüssige und zentrierte Einbringung in das Gehäuse 4 dargestellt.

Figur 10 zeigt den Spannsatz als vergrößertes Detail aus Figur 9. Ferner ist das erfindungsgemäße Spannelement weiter detailliert. Zum Verspannen wird die Spannschraube 40 verwendet. Hierdurch wird das Abdeckungselement 10 mit dem Gehäuse 4 verbunden.

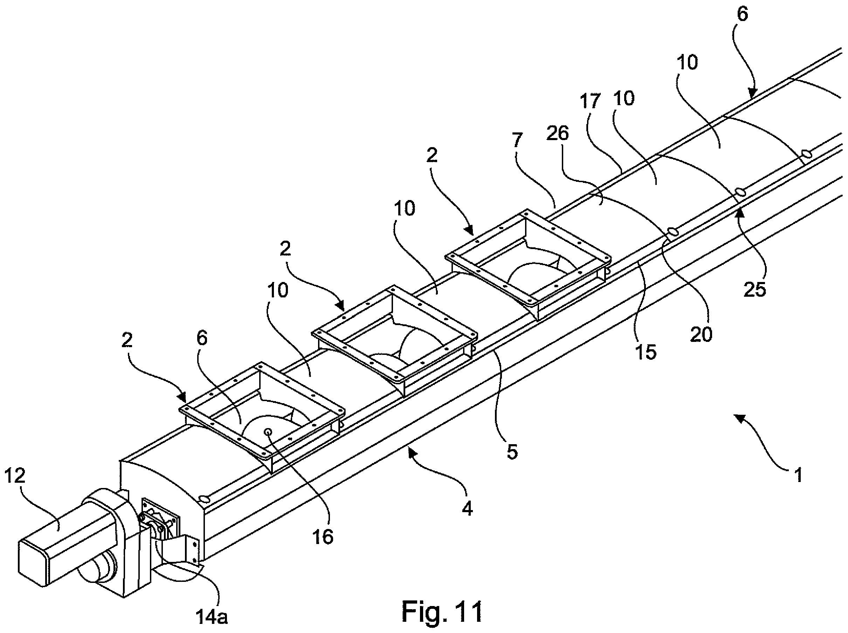

Figur 11 zeigt ein alternatives Ausführungsbeispiel eines Trogförderers 1 mit mehreren Abdeckungselementen 10 und mehreren Zuführeinrichtungen 2 in einer perspektivischen Ansicht. Der Trogförderer 1 kann damit zum Fördern und Mischen gleicher oder unterschiedlicher Güter aus mehr als einer Zuführeinrichtung 2 verwendet werden. Es wird vollumfänglich auf die vorherigen Beschreibungen des ersten Ausführungsbeispiels Bezug genommen, da eine Vielzahl von Gemeinsamkeiten bestehen, wie der Fachmann erkennt.

Die Erfindung wird ferner beschrieben anhand der nachfolgenden Ausführungsbeispiele, worin:
1. Trogförderer zum Fördern eines Gutes, wenigstens umfassend:
   mindestens eine Zuführeinrichtung zum Zuführen des Gutes,
   ein trogförmiges Gehäuse, welches mindestens eine Öffnung an seiner Oberseite und einen Auslass zum Abgeben des Gutes aufweist,
   mindestens ein Abdeckungselement zur Abdeckung der Öffnung, und
   ein Förderelement zum Bewegen des Gutes in dem Gehäuse,
   dadurch gekennzeichnet, dass das mindestens eine Abdeckungselement eine konvexe Wölbung aufweist.
2. Trogförderer nach dem Oberbegriff des Ausführungsbeispiels 1 oder Ausführungsbeispiel 1,
   dadurch gekennzeichnet, dass das mindestens eine Abdeckungselement im Wesentlichen aus Kunststoff besteht.
3. Trogförderer nach dem Oberbegriff des Ausführungsbeispiels 1 oder Ausführungsbeispiel 1,
   dadurch gekennzeichnet, dass mindestens ein oberer Randbereich des Gehäuses so schräg relativ zu einer Vertikalen verlaufend ausgebildet ist, dass ein Anbauteil, insbesondere die Zuführeinrichtung und/oder das Abdeckungselement relativ zum Gehäuse formschlüssig zentriert ist.
4. Trogförderer nach dem Oberbegriff des Ausführungsbeispiels 1 oder Ausführungsbeispiel 1,
   dadurch gekennzeichnet, dass ein an dem Gehäuse angeordneter Spannsatz zur Verspannung mindestens eines Abdeckungselements mit dem trogförmigen Gehäuse vorgesehen ist, wobei der Spannsatz ein Spannband enthält, welches sich wenigstens teilweise entlang der Oberfläche des Abdeckungselements erstreckt, und eine Spanneinrichtung zur Verspannung des Abdeckungselements mit dem trogförmigen Gehäuse enthält.
5. Trogförderer nach mindestens einem der vorstehenden Ausführungsbeispiele,
   dadurch gekennzeichnet, dass die Zuführeinrichtung(en) wenigstens abschnittsweise oberhalb der Öffnung des Gehäuses angeordnet und so ausgebildet ist bzw. sind, dass sie mindestens an den zur Längsachse des Gehäuses parallel verlaufenden Rändern des trogförmigen Gehäuses formschlüssig einpassbar sind,
   und/oder dadurch gekennzeichnet, dass die Zuführeinrichtungen auf dem trogförmigen Gehäuse in Längsrichtung an beliebiger Position positionierbar und fixierbar sind.
6. Trogförderer nach mindestens einem der vorstehenden Ausführungsbeispiele,
   dadurch gekennzeichnet, dass eine Vielzahl von konvex gewölbten Abdeckungselementen benachbart zueinander und/oder benachbart zu mindestens einer Zuführeinrichtung zum Abdecken der Öffnung der Oberseite des Gehäuses entlang der Längsachse des Gehäuses angeordnet sind.
7. Trogförderer nach mindestens einem der vorstehenden Ausführungsbeispiele,
   dadurch gekennzeichnet, dass das Abdeckungselement an gegenüberliegenden Randbereichen jeweils eine schräg relativ zu einer Vertikalen angeordnete Randfläche aufweist,
   wobei jede Randfläche im eingebauten Zustand mit einer wenigstens teilweise konformen Kontaktfläche des Randbereichs des Gehäuses in Kontakt steht, vorzugsweise unter Zwischenschaltung eines Dichtungselementes, so dass das Abdeckungselement relativ zur Längsachse des Gehäuses zentriert ist.
8. Trogförderer nach Ausführungsbeispiel 7,
   dadurch gekennzeichnet, dass das Abdeckungselement einen im Wesentlichen wannenförmigen Grundkörper, an dem die Randflächen ausgebildet ist, sowie einen über den wannenförmigen Grundkörper seitlich hinausragenden Deckel aufweist, dessen seitliche Randbereiche flanschartig abstehen.
9. Trogförderer nach mindestens einem der vorstehenden Ausführungsbeispiele,
   dadurch gekennzeichnet, dass das Abdeckungselement auf seiner konvexen Außenseite eine UV-beständige und/oder lichtreflektierende Oberfläche, vorzugsweise Beschichtung aufweist, und/oder
   die Abdeckung auf ihrer Innenseite eine lebensmittelechte Oberfläche, vorzugsweise Beschichtung aufweist.
10. Trogförderer nach mindestens einem der vorstehenden Ausführungsbeispiele,
   dadurch gekennzeichnet, dass an den beiden gegenüberliegenden Randbereichen des Gehäuses jeweils eine sich schräg nach außen erstreckende nach innen bzw. oben weisende Kontaktfläche zum Abstützen eines Anbauteils, insbesondere eines Abdeckungselementes und/oder einer Zuführeinrichtung, aufweist.
11. Trogförderer nach Ausführungsbeispiel 10,
   dadurch gekennzeichnet, dass an dem oberen Randbereich des Gehäuses auf jeder der gegenüberliegenden Seiten ein flanschartig abstehender, sich wenigstens teilweise nach außen und schräg unten erstreckender Randbereich ausgebildet ist,
   wobei vorzugsweise ein Abschnitt des Abdeckungselementes, insbesondere der Deckel des Abdeckungselementes parallel entlang des flanschartig abstehenden Randbereichs verläuft.
12. Trogförderer nach mindestens einem der vorstehenden Ausführungsbeispiele,
   dadurch gekennzeichnet, dass der wannenförmige Grundkörper mit seinem Randbereich an der Kontaktfläche des Randbereichs des Gehäuses und der Deckel des Abdeckungselementes an dem flanschartig abstehenden Randbereich anliegt.
13. Trogförderer nach mindestens einem der vorstehenden Ausführungsbeispiele,
   dadurch gekennzeichnet, dass die Zuführeinrichtung einen auf den oberen Randbereich des Gehäuses aufsetzbaren Kasten aufweist, durch welchen das zu fördernde Gut von oben durch die Öffnung des Gehäuses in den Trogförderer einführbar ist.
14. Trogförderer nach Ausführungsbeispiel 13,
   dadurch gekennzeichnet, dass die vorzugsweise als Kasten ausgebildete Zuführeinrichtung an einer Vielzahl von vorzugsweise stufenlos variierbaren Positionen an dem Randbereich des Gehäuses fixierbar ist.
15. Trogförderer nach Ausführungsbeispiel 13 oder 14,
   dadurch gekennzeichnet, dass der Kasten an zwei gegenüberliegenden unteren Randbereichen jeweils eine schräg gegenüber einer Vertikalen angeordnete Kontaktfläche aufweist, die wenigstens Abschnittsweise konform zu der Randfläche des Gehäuses ausgebildet ist, so dass der Kasten zwischen den gegenüberliegenden Randbereichen des Gehäuses zentriert ist.
16. Trogförderer nach mindestens einem der vorstehenden Ausführungsbeispiele,
   dadurch gekennzeichnet, dass die Zuführeinrichtung mittels mindestens zweier Abdeckungselemente axial bezogen auf die Längsachse des Gehäuses des Trogförderers fixiert ist.
17. Trogförderer nach mindestens einem der vorstehenden Ausführungsbeispiele,
   dadurch gekennzeichnet, dass mehrere Zuführeinrichtungen an verschiedenen axial versetzten Positionen zum Zuführen eines Gutes oder verschiedener Güter an dem Gehäuse angeordnet und zwischen mehreren Abdeckungselementen fixiert sind.
18. Trogförderer nach mindestens einem der vorstehenden Ausführungsbeispiele,
   dadurch gekennzeichnet, dass die Abdeckungselemente als Profil aus Kunststoff ausgebildet und mittels einer Schneideinrichtung in einer bestimmten Länge bezogen auf die Längsachse ablängbar sind.
19. Trogförderer nach mindestens einem der vorstehenden Ausführungsbeispiele,
   dadurch gekennzeichnet, dass ein Spannband sich im Wesentlichen von einem Randbereich des Gehäuses zu dem gegenüberliegenden Randbereich des Gehäuses erstreckt und dabei eine Fuge zwischen benachbarten Abdeckungselementen wenigstens teilweise abdeckt.
20. Trogförderer nach mindestens einem der Ausführungsbeispiele 5 bis 19,
   dadurch gekennzeichnet, dass jede Spanneinrichtung mindestens eine mit dem Gehäuse kooperierende Spannschraube zum Verspannen der Spannbande aufweist.
21. Trogförderer nach mindestens einem der vorstehenden Ausführungsbeispiele 5 bis 20,
   dadurch gekennzeichnet, dass mindestens eine Zuführeinrichtung mittels mindestens einer Spanneinrichtung in ihrer axialen Position an dem Gehäuse durch Verspannung fixiert ist.

### Bezugszeichenliste

- 1: Trogförderer
- 2: Zuführeinrichtung
- 3: Gut
- 4: Gehäuse
- 5, 7: Randbereich
- 6: Öffnung
- 8: Auslass
- 9,11: Kontaktfläche
- 10: Abdeckungselement
- 15, 17: Randbereich
- 21,: 23Randfläche
- 12: Antriebseinheit
- 13: Drehachse; Längsachse
- 14a,b: Lager
- 16: Förderelement
- 18: Seitenblech der Zuführeinrichtung
- 20: Spannband
- 22: Gehäuseabschnitt der Zuführeinrichtung
- 24: Aussparung
- 25: Spannsatz
- 26: Spannband
- 28: Spannelement
- 32: Flansch
- 34: Seitenblech der Zuführeinrichtung
- 36: Seitenblech der Zuführeinrichtung
- 38: Seitenblech der Zuführeinrichtung
- 40: Spannschraube
- 42: Mutter
- 44: Unterlegscheibe
- 51: Grundkörper
- 52: Grundkörper des Abdeckungselements
- 58: Deckel
- 62, 64: Randbereich

## Patentansprüche

1. Trogförderer zum Fördern eines Gutes, wenigstens umfassend:
mindestens eine Zuführeinrichtung zum Zuführen des Gutes,
ein trogförmiges Gehäuse, welches mindestens eine Öffnung an seiner Oberseite und einen Auslass zum Abgeben des Gutes aufweist,
mindestens ein Abdeckungselement zur Abdeckung der Öffnung, und
ein Förderelement zum Bewegen des Gutes in dem Gehäuse,
**dadurch gekennzeichnet, dass** das mindestens eine Abdeckungselement eine konvexe Wölbung aufweist und im Wesentlichen aus Kunststoff besteht.

2. Trogförderer nach dem Oberbegriff des Anspruchs 1 oder Anspruch 1,
**dadurch gekennzeichnet, dass** ein an dem Gehäuse angeordneter Spannsatz zur Verspannung mindestens eines Abdeckungselements mit dem trogförmigen Gehäuse vorgesehen ist, wobei der Spannsatz ein Spannband enthält, welches sich wenigstens teilweise entlang der Oberfläche des Abdeckungselements erstreckt, und eine Spanneinrichtung zur Verspannung des Abdeckungselements mit dem trogförmigen Gehäuse enthält.

3. Trogförderer nach mindestens einem der vorstehenden Ansprüche,
**dadurch gekennzeichnet, dass** mindestens ein oberer Randbereich des Gehäuses so schräg relativ zu einer Vertikalen verlaufend ausgebildet ist, dass ein Anbauteil, insbesondere die Zuführeinrichtung und/oder das Abdeckungselement relativ zum Gehäuse formschlüssig zentriert ist.

4. Trogförderer nach mindestens einem der vorstehenden Ansprüche,
**dadurch gekennzeichnet, dass** die Zuführeinrichtung(en) wenigstens abschnittsweise oberhalb der Öffnung des Gehäuses angeordnet und so ausgebildet ist bzw. sind, dass sie mindestens an den zur Längsachse des Gehäuses parallel verlaufenden Rändern des trogförmigen Gehäuses formschlüssig einpassbar sind,
und/oder **dadurch gekennzeichnet, dass** die Zuführeinrichtungen auf dem trogförmigen Gehäuse in Längsrichtung an beliebiger Position positionierbar und fixierbar sind.

5. Trogförderer nach mindestens einem der vorstehenden Ansprüche,
**dadurch gekennzeichnet, dass** eine Vielzahl von konvex gewölbten Abdeckungselementen benachbart zueinander und/oder benachbart zu mindestens einer Zuführeinrichtung zum Abdecken der Öffnung der Oberseite des Gehäuses entlang der Längsachse des Gehäuses angeordnet sind.

6. Trogförderer nach mindestens einem der vorstehenden Ansprüche,
**dadurch gekennzeichnet, dass** das Abdeckungselement an gegenüberliegenden Randbereichen jeweils eine schräg relativ zu einer Vertikalen angeordnete Randfläche aufweist,
wobei jede Randfläche im eingebauten Zustand mit einer wenigstens teilweise konformen Kontaktfläche des Randbereichs des Gehäuses in Kontakt steht, vorzugsweise unter Zwischenschaltung eines Dichtungselementes, so dass das Abdeckungselement relativ zur Längsachse des Gehäuses zentriert ist und/oder das Abdeckungselement einen im Wesentlichen wannenförmigen Grundkörper aufweist, an dem die Randflächen ausgebildet ist, sowie einen über den wannenförmigen Grundkörper seitlich hinausragenden Deckel aufweist, dessen seitliche Randbereiche flanschartig abstehen.

7. Trogförderer nach mindestens einem der vorstehenden Ansprüche,
**dadurch gekennzeichnet, dass** an den beiden gegenüberliegenden Randbereichen des Gehäuses jeweils eine sich schräg nach außen erstreckende nach innen bzw. oben weisende Kontaktfläche zum Abstützen eines Anbauteils, insbesondere eines Abdeckungselementes und/oder einer Zuführeinrichtung, aufweist.

8. Trogförderer nach Anspruch 7,
**dadurch gekennzeichnet, dass** an dem oberen Randbereich des Gehäuses auf jeder der gegenüberliegenden Seiten ein flanschartig abstehender, sich wenigstens teilweise nach nach außen und schräg unten erstreckender Randbereich ausgebildet ist,
wobei vorzugsweise ein Abschnitt des Abdeckungselementes, insbesondere der Deckel des Abdeckungselementes parallel entlang des flanschartig abstehenden Randbereichs verläuft.

9. Trogförderer nach mindestens einem der vorstehenden Ansprüche,
**dadurch gekennzeichnet, dass** der wannenförmige Grundkörper mit seinem Randbereich an der Kontaktfläche des Randbereichs des Gehäuses und der Deckel des Abdeckungselementes an dem flanschartig abstehenden Randbereich anliegt.

10. Trogförderer nach mindestens einem der vorstehenden Ansprüche,
**dadurch gekennzeichnet, dass** die Zuführeinrichtung einen auf den oberen Randbereich des Gehäuses aufsetzbaren Kasten aufweist, durch welchen das zu fördernde Gut von oben durch die Öffnung des Gehäuses in den Trogförderer einführbar ist.

11. Trogförderer nach Anspruch 10,
**dadurch gekennzeichnet, dass** die vorzugsweise als Kasten ausgebildete Zuführeinrichtung an einer Vielzahl von vorzugsweise stufenlos variierbaren Positionen an dem Randbereich des Gehäuses fixierbar ist.

12. Trogförderer nach Anspruch 10 oder 11,
**dadurch gekennzeichnet, dass** der Kasten an zwei gegenüberliegenden unteren Randbereichen jeweils eine schräg gegenüber einer Vertikalen angeordnete Kontaktfläche aufweist, die wenigstens Abschnittsweise konform zu der Randfläche des Gehäuses ausgebildet ist, so dass der Kasten zwischen den gegenüberliegenden Randbereichen des Gehäuses zentriert ist.

13. Trogförderer nach mindestens einem der vorstehenden Ansprüche,
**dadurch gekennzeichnet, dass** die Zuführeinrichtung mittels mindestens zweier Abdeckungselemente axial bezogen auf die Längsachse des Gehäuses des Trogförderers fixiert ist.

14. Trogförderer nach mindestens einem der vorstehenden Ansprüche,
**dadurch gekennzeichnet, dass** mehrere Zuführeinrichtungen an verschiedenen axial versetzten Positionen zum Zuführen eines Gutes oder verschiedener Güter an dem Gehäuse angeordnet und zwischen mehreren Abdeckungselementen fixiert sind.

15. Trogförderer nach mindestens einem der vorstehenden Ansprüche,
**dadurch gekennzeichnet, dass** ein Spannband sich im Wesentlichen von einem Randbereich des Gehäuses zu dem gegenüberliegenden Randbereich des Gehäuses erstreckt und dabei eine Fuge zwischen benachbarten Abdeckungselementen wenigstens teilweise abdeckt und/oder jede Spanneinrichtung mindestens eine mit dem Gehäuse kooperierende Spannschraube zum Verspannen der Spannbande aufweist und/oder mindestens eine Zuführeinrichtung mittels mindestens einer Spanneinrichtung in ihrer axialen Position an dem Gehäuse durch Verspannung fixiert ist.
